# EUROPEAN PATENT SPECIFICATION

(11) **EP 4 491 313 B1**
(45) Date of publication and mention of the grant of the patent: **29.04.2026**
(21) Application number: 24185044.5
(22) Date of filing: 27.06.2024
(51) Int. Cl.: B23K 9/09, B23K 9/095, B23K 9/10, B23K 9/167

(54) **WELDING POWER SUPPLY AND WELDING SYSTEM HAVING USER-DEFINED PULSE WELDING FREQUENCIES**
SCHWEISSLEISTUNGSQUELLE UND SCHWEISSSYSTEM MIT BENUTZERDEFINIERTEN IMPULSSCHWEISSFREQUENZEN
SOURCE DE PUISSANCE DE SOUDAGE ET SYSTÈME DE SOUDAGE AYANT DES FRÉQUENCES DE SOUDAGE PAR IMPULSIONS DÉFINIES PAR L'UTILISATEUR

(30) Priority: 30.06.2023 US 202363511416 P; 25.06.2024 US 202418753677
(43) Date of publication of application: 15.01.2025
(73) Proprietor: Illinois Tool Works Inc., Glenview IL 60025 (US)
(72) Inventor: GILL, Samuel Paul, Glenview, IL 60025 (US); KNOENER, Craig Steven, Glenview, IL 60025 (US)
(74) Representative: HGF

(56) References cited:
- WO-A1-2022/039800
- CN-A- 107 264 090
- CN-A- 115 722 764
- US-A1- 2021 129 252

## Description

This present invention relates generally to welding-type systems and, more particularly, to a welding power supply and a welding system, see claims 1 and 12.

### BACKGROUND

Gas tungsten arc welding (GTAW), also referred to as TIG welding, enables weld operators to use cyclic waveforms that repeat based on a selected frequency and/or non-cyclic waveforms that occur based on the selected frequency. The pulse frequency is represented by a numerical value, and user may not understand how a given frequency will appear in the arc until the arc has been initiated. The lack of understanding can lead to a time-consuming trial-and-error process of guessing a pulse frequency, initiating the arc, and adjusting the pulse frequency.

Prior patent document CN115722764 A (describing the preamble of claims 1 and 12) shows an example of a welding-type power supply that includes power conversion circuitry configured to convert input power to welding-type power and a user interface configured to receive two or more inputs associated with corresponding qualitative characteristics of a welding arc generated by the welding-type power. The two or more inputs are defined within corresponding ranges of the corresponding qualitative characteristics. The welding-type power supply also comprises control circuitry configured to: in response to a change in a first input of the two or more inputs, determine a corresponding change in a second input of the two or more inputs based on a relationship between the first input of the two or more inputs and the second input; determine two or more welding type parameters based on the two or more inputs; and control the power conversion circuitry based on the determined welding type parameter.

### SUMMARY

The present invention is defined by appended claims 1 and 12

Further preferred embodiments are defined in the appended claims.

### BRIEF DESCRIPTION OF THE DRAWINGS

FIG. 1 is a schematic diagram of an example welding system including a welding-type power supply configured to output welding-type power.
FIG. 2A illustrates an example interface which may implement the welding power supply user interface of FIG. 1 to input a sequence of pulse frequency inputs.
FIG. 2B illustrates an example interface which may implement the welding power supply user interface of FIG. 1 to input a sequence of pulse frequency inputs including durations.
FIG. 3A illustrates an example interface which may implement the remote device interface of FIG. 1 to input a sequence of pulse frequency inputs.
FIG. 3B illustrates an example interface which may implement the remote device interface of FIG. 1 to input a sequence of pulse frequency inputs including durations.
FIG. 4 is a flowchart representative of example machine readable instructions which may be implemented by the power supply of FIG. 1 to output welding power including pulses defined based on pulse frequency inputs.
FIG. 5 is a flowchart representative of example machine readable instructions which may be implemented by the power supply of FIG. 1 to monitor instances of a pulse frequency input to calculate frequency of the instances of the input.

The figures are not to scale. Where appropriate, the same or similar reference numerals are used in the figures to refer to similar or identical elements.

### DETAILED DESCRIPTION

As mentioned above, the pulse frequency of conventional welding systems employing pulse waveforms may not be easily understood by a weld operator. However, the weld operator may have a conceptual understanding of the rhythm or pace of the desired pulse waveform, without knowing how the desired rhythm or pace correlates to a particular pulse frequency.

Disclosed example welding systems and methods provide an interface and input method which allows the operator to define the desired pulse frequency, which is then used to control the pulse waveform. In some disclosed examples, the operator may select a pulse frequency input interface or function. The pulse frequency input interface enables the operator to provide multiple sequential inputs, which are measured and used to calculate an input frequency. Disclosed example systems and methods then determine the pulse frequency from the calculated input frequency, and control the welding pulse waveform using the determined pulse frequency.

In some examples, the pulse frequency input interface defines one or more inputs to be used by the operator to provide the frequency inputs. For example, the operator may push a particular button (or one of a set of permissible buttons) multiple times, at the desired frequency at which the operator would like the pulses to occur (e.g., mimicking the frequency as conceptually understood by the operator). In other examples, the operator may provide the input via other methods, such as by touching a tungsten torch tip to a workpiece, repeatedly actuating a foot pedal or fingertip input, touching a filler material to the workpiece, providing an input via a remote interface (e.g., a computing device, a remote interface such as a wire feeder, etc.), a voice input, a different type of interface input device (e.g., switches, knobs, etc.), and/or any other method of providing multiple instances of an input from which a frequency can be calculated.

By monitoring the multiple instances of the operator inputs, disclosed example systems and methods calculate a frequency of the instances (also referred to herein as samples) of the inputs. For example, example systems and methods average the times between the inputs (e.g., from leading edge of an input to leading edge of the next input) and determine the frequency based on the average time. Disclosed examples may use a running average of a predetermined number of input samples, all of the input samples, and/or any subset of the input samples. For example, the operator may be permitted to continue inputting samples until the operator is satisfied that the most recent rhythm or cadence is the desired cadence. In some examples, outlier samples (e.g., samples of more than a threshold from the calculated average) are discarded to improve ease of use for the operator.

According to the invention, there is provided a welding power supply as defined in claim 1, comprising:
power conversion circuitry configured to convert input power to welding power; an input device configured to receive a plurality of instances of an input; and control circuitry configured to: calculate a frequency of the plurality of instances of the input; and control the power conversion circuitry to output the welding power as a series of pulses having a pulse frequency determined based on the calculated frequency.

In some example welding power supplies, the input device is an operator interface on a housing of the welding power supply configured to receive the plurality of instances of the input via repeated inputs to the input device. In some example welding power supplies, the input device is a remote control device communicatively coupled to the welding power supply. In some example welding power supplies, the input device is at least one of a welding torch or a filler metal feeder in electrical communication with the welding power supply, and the input device is configured to detect the plurality of instances of the input via at least one of a capacitive sensor, a voltage sensor, or a current sensor.

In some example welding power supplies, the control circuitry is configured to calculate the frequency of the plurality of instances of the input based on filtering measured times between sequential ones of the plurality of instances of the input. In some example welding power supplies, the filtering involves averaging. In some example welding power supplies, the filtering involves removing one or more of the measured times. In some example welding power supplies, the filtering involves populating a first-in-first-out buffer of the measured times, the buffer having a predetermined number of measured times, and the control circuitry is configured to determine the frequency of the plurality of instances of the input based on the measured times in the buffer.

In some example welding power supplies, the input device includes a microphone. In some example welding power supplies, the control circuitry is configured to output audible or visual feedback in response to detecting inputs via the input device.

In some example welding power supplies, the control circuitry is configured to determine the pulse frequency based on rounding the calculated frequency of the plurality of inputs to at least one of a predetermined discrete pulse frequency or a predetermined precision. In some example welding power supplies, the control circuitry is configured to: determine at least one of a peak time of a peak phase or a background time of a background phase, based on at least one of calculated durations of the plurality of inputs or calculated durations between the plurality of inputs; and control the power conversion circuitry based on a plurality of pulse cycles, the pulse cycles occurring at the determined pulse frequency and each pulse cycle having the peak phase and the background phase.

According to the invention there is also provided a welding system as defined in claim 12, comprising: an interface device configured to receive a plurality of instances of an input; and a welding power supply. The interface device is configured to calculate a frequency of the plurality of instances of the input, and communicate, to the welding power supply, the frequency of the plurality of instances of the input. The welding power supply comprises power conversion circuitry configured to convert input power to welding power; communication circuitry configured to receive, from the interface device, the frequency of the plurality of instances of the input; and control circuitry configured to control the power conversion circuitry to output the welding power as a series of pulses having a pulse frequency determined based on the frequency of the plurality of instances of the input.

In some example welding systems, the interface device includes at least one of a smartphone, a smart watch, a tablet computer.

As used herein, "power conversion circuitry" and/or "power conversion circuits" refer to circuitry and/or electrical components that convert electrical power from one or more first forms (e.g., power output by a generator) to one or more second forms having any combination of voltage, current, frequency, and/or response characteristics. The power conversion circuitry may include power limiting circuitry, output selection circuitry, measurement and/or control circuitry, and/or any other circuits to provide appropriate features.

The term "welding-type system," as used herein, includes any device capable of supplying power suitable for welding, plasma cutting, induction heating, Carbon Arc Cutting-Air (e.g., CAC-A) and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, a "circuit," or "circuitry," includes any analog and/or digital components, power and/or control elements, such as a microprocessor, digital signal processor (DSP), software, and the like, discrete and/or integrated components, or portions and/or combinations thereof. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller, and are used to control a welding process, a device such as a power source or wire feeder, and/or any other type of welding-related system.

As used herein, the term "memory" includes volatile and non-volatile memory devices and/or other storage device.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

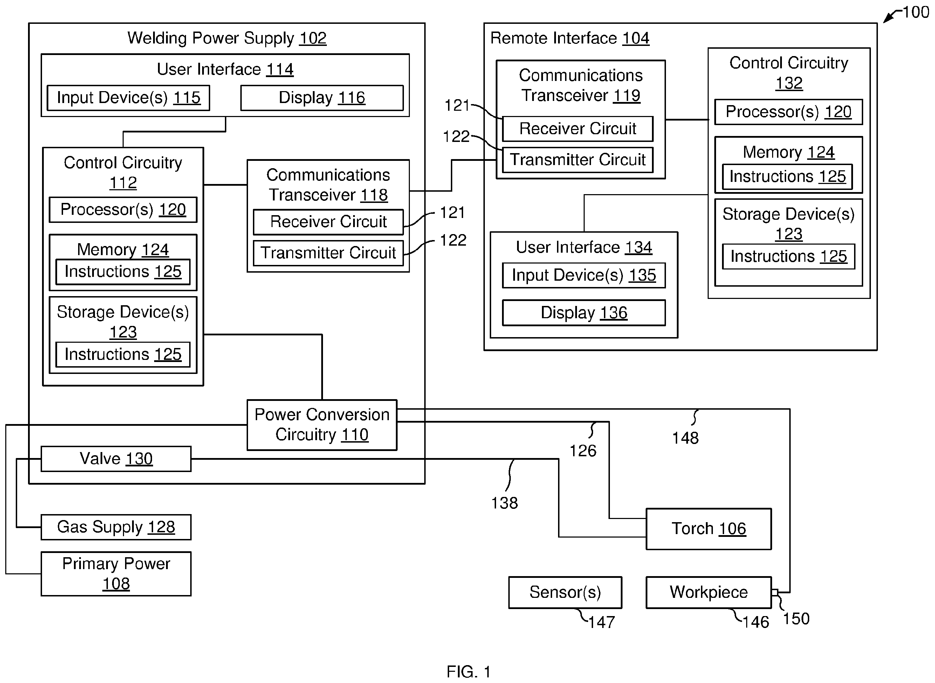

Turning now to the drawings, FIG. 1 is a block diagram of an example welding system 100 having a welding-type power supply 102, a remote interface 104, and a welding torch 106. The welding system 100 powers, controls, and/or supplies consumables to a welding application. In the example of FIG. 1, the power supply 102 directly supplies welding-type output power to the welding torch 106. The welding torch 106 is configured for gas tungsten arc welding (GTAW), which may be used to perform welding processes involving DC welding-type current, pulsed DC welding-type current waveforms, and/or AC waveforms. Example DC pulse waveforms that may be output by the power supply 102 have a peak phase at a peak current and a background phase at a background current, and one pulse cycle includes one peak phase and one background phase.

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a target amperage (e.g., a weld current setpoint) and outputs the welding-type power via a weld circuit.

The power supply 102 includes control circuitry 112 to control the operation of the power supply 102. The power supply 102 also includes a user interface 114. The control circuitry 112 receives input from the user interface 114, through which a user may choose a process and/or input desired parameters (e.g., a voltage, a current, a frequency, pulse peak current time, a pulse peak current percentage, a pulse background current time, a pulse background current percentage, an AC waveform type, an AC balance, a weld circuit inductance, etc.). The user interface 114 may receive inputs using one or more input devices 115, such as via a keypad, keyboard, physical buttons, switches, knobs, a mouse, a keyboard, a keypad, a touch screen (e.g., software buttons), a voice activation system, a wireless device, etc. Furthermore, the control circuitry 112 controls operating parameters based on input by the user as well as based on other current operating parameters. Specifically, the user interface 114 may include a display 116 for presenting, showing, or indicating, information to an operator.

Similarly, the example remote interface 104 may include a user interface 134 having one or more input device(s) 135 and a display 136. The user interface 134, the input device(s) 135, and/or the display 136 may be similar, identical, or different than the user interface 114, the input device(s) 115, and/or the display 116.

The control circuitry 112 may also include interface circuitry for communicating data to other devices in the system 100, such as the remote interface 104. For example, in some situations, the power supply 102 wirelessly communicates with the remote interface 104. Further, in some situations, the power supply 102 communicates with the remote interface 104 using a wired connection, such as by using a network interface controller (NIC) to communicate data via a network (e.g., ETHERNET, 10baseT, 10base100, etc.), and/or. In some examples, the control circuitry 112 communicates with the remote interface 104 via the weld circuit.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include predetermined relationships between frequency and amperage, such as one or more look up tables, as described in more detail below.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 138 (which in some implementations may be packaged with the welding power output) to the welding torch 106, which provides the shielding gas to the welding application. In some examples, the welding system 100 does not include the gas supply 128, the valve 130, and/or the cable 138.

In the example of FIG. 1, the power supply 102 includes a communications transceiver 118, and the remote interface 104 includes a communications transceiver 119. The communications transceivers 118, 119 each include a corresponding receiver circuit 121 and a corresponding transmitter circuit 122. The example communications transceivers 118, 119 enable the remote interface 104 to transmit commands to the power supply 102 and/or receive information from the power supply 102. Example commands may include commands to set parameters and/or otherwise configure the power supply 102. The remote interface 104 may receive information about the configuration of the power supply 102.

The remote interface 104 further includes control circuitry 132, which may include one or more processor(s) 120, one or more storage device(s) 123, and/or memory 124, and/or may store and execute machine readable instructions 125. The control circuitry 132, the processor(s) 120, the storage device(s) 123, and/or the memory 124 may be similar, identical, or different than the control circuitry 112, the processor(s) 120, the storage device(s) 123, and/or the memory 124 of the power supply 102.

The welding torch 106 delivers the welding power and/or shielding gas for a welding application. The welding torch 106 is used to establish a welding arc between the welding torch 106 and a workpiece 146. A welding cable 126 couples the torch 106 to the power conversion circuitry 110 to conduct current to the torch 106. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

In some examples, one or more sensors 147 are included with or connected to the welding torch 106 to monitor one or more welding parameters (e.g., power, voltage, current, inductance, impedance, etc.) to inform the control circuitry 132 and/or 112 during the welding process.

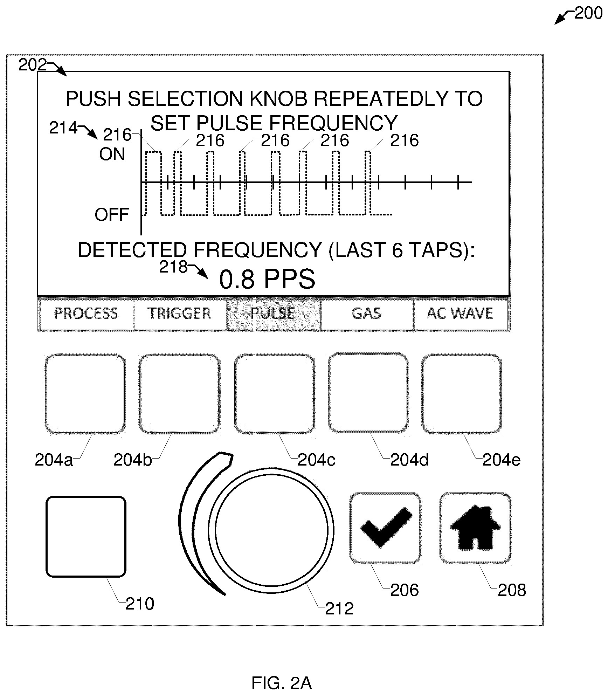

To aid the operator in setting a pulse frequency for pulse welding, the user interface 114 and/or the user interface 134 may display a pulse frequency input interface. FIG. 2A is an example user interface 200 that may implement the user interface 114, 134 of FIG. 1 to enable an operator to multiple instances (or samples) of an input, which may be used by the control circuitry 112, 132 to determine a pulse frequency. The example user interface 200 of FIG. 2A includes a display 202, input buttons 204a-204e, 206, 208, 210, and an input knob 212. The example buttons 204a-204e, 206, 208, 210, and the input knob 212 may implement the input devices 115, 135 of FIG. 1.

The example buttons 204a-204e enable an operator to select one or more weld parameters for adjustment or recall (e.g., by recalling a weld schedule or stored set of parameters). Once a parameter is selected, the example knob 212 receives inputs to change the value of the parameter, such as by increasing (e.g., incrementing) or decreasing (e.g., decrementing) a value of a parameter and/or selecting between discrete values of a parameter. For example, an operator may turn the knob 212 to select an AC waveform or a DC pulse process, to change a welding amperage, change an AC or DC pulse frequency, and/or to change any other parameters.

The button 206 may be selected to confirm a selected parameter. In the example of FIG. 2A, the knob 212 may also function as a selection button, similar to button 206. The button 208 enables navigation, such as by canceling a parameter change and/or reverting to a prior menu.

The example button 210 may be selected to select the pulse frequency input interface. For example, when the button 210 is selected, the display 202 may display instructions and/or feedback for an operator to provide inputs representative of the desired pulse frequency. Any of the example input buttons 204a-204e, 206, 208, 210, and/or the input knob 212 may be used by the operator to provide inputs for determination of a pulse frequency.

In FIG. 2A, the display 202 illustrates a graph 214 illustrating the relative timing of multiple detected inputs (e.g., received via the example input buttons 204a-204e, 206, 208, 210, and/or the input knob 212), which are used by the control circuitry 112, 132 to detect or calculate a frequency. In the illustrated example, the control circuitry 112, 132 uses the times between the most recent six inputs (or "taps") provided by the operator to determine an average time. The display 202 may illustrate the detections and timings of the inputs 216 in the graph 214 with reference to time on the horizontal axis.

Based on the calculated average time, the control circuitry 112, 132 calculates and displays the determined pulse frequency 218 on the display 202. The control circuitry 112, 132 may update the determined pulse frequency 218 as the operator continues to include additional inputs.

While the graph 214 illustrates both timing and durations of the inputs 216, in other examples the inputs 216 are illustrated as only inputs (e.g., without duration information). For example, the inputs 216 may be illustrated as spikes in a waveform or using a graphical indicator (e.g., dots or any other marker) to illustrate the detected time of the input 216 on the graph 214. The graph 214 may appear to scroll horizontally if the operator enters a sufficient number of inputs 216 to extend beyond the time scale of the graph 214, in which the earliest inputs 216 are removed from the display 202 as newer inputs 216 are received.

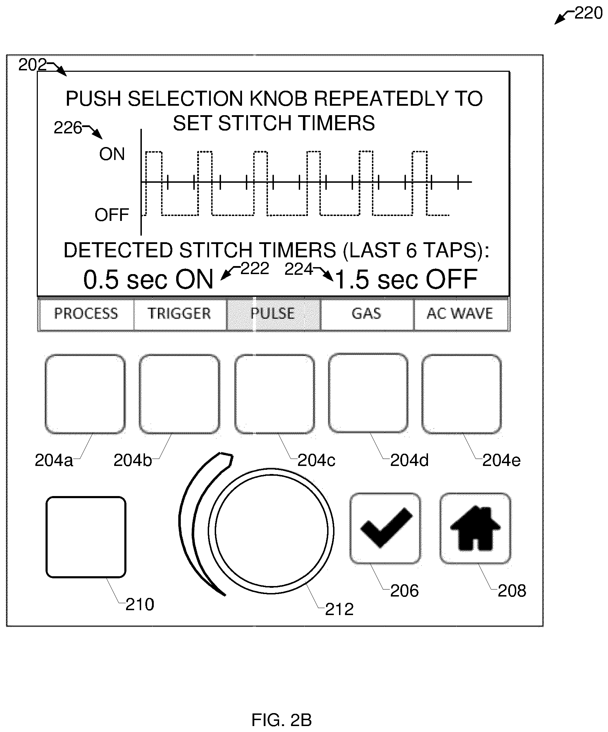

In addition to defining a pulse frequency using the user interface 200, the example user interface 200 may enable an operator to define a desired stitch welding timing. FIG. 2B illustrates the example user interface 200 including another example pulse frequency input interface 220, which enables an operator to input multiple instances (or samples) of an input, which may be used by the control circuitry 112, 132 to determine stitch timers including both arc on time and arc off time. The example pulse frequency input interface 220 is similar to the interface described above with reference to FIG. 2A, and includes the input buttons 204a-204e, 206, 208, 210, the input knob 212, and the display 202.

While the example interface 200 is described with reference to the operator providing inputs via the interface 200, the interface 200 may provide similar displays for other types of inputs. For example, the interface 200 may include a graph 226 on the display 202 while the operator enters inputs via touching a tungsten tip (e.g., a tungsten tip of the torch 106) to a workpiece (e.g., the workpiece 146), manipulating a foot pedal or fingertip control, providing voice inputs, providing an input via a remote interface, or any other input. The sensor(s) 147 may include a capacitive sensor, a voltage sensor, a current sensor, and/or a motion sensor (e.g., a gyroscope, an accelerometer, etc.), in combination with corresponding circuitry to provide a detectable electric potential, to detect contact between the tungsten tip or filler metal and the workpiece 146. For example, the power conversion circuitry 110, or separate detection circuitry, may output a low detection voltage to the torch 106 and the workpiece 146, such that the sensor(s) 147 can detect a change in voltage or output current, a change in capacitance or impedance, and/or other change in the weld circuit, to detect contact or lack of contact between the tungsten tip or filler metal and the workpiece 146 to identify the input.

In the example of FIG. 2B, the example control circuitry 112, 132 monitors both the durations that the input device is actuated (e.g., the duration that the input button 204a-204e, 206, 208, 210 or knob 212 is depressed by the user, the duration that a tungsten tip is in contact with the workpiece, the duration of a voice input, the duration that a foot pedal or fingertip control is depressed, etc.) and the durations that the input device is not actuated (e.g., the durations that the input device is released by the user the duration that a tungsten tip is out of contact with the workpiece, the duration that a voice input is not present, the duration that a foot pedal or fingertip control is released, etc.).

As the input device is monitored, the control circuitry 112, 132 updates the graph 226 to indicate the times at which the input device is actuated (e.g., ON time) and the times at which the input device is not actuated (e.g., OFF time). The control circuitry 112, 132 calculates and displays a spot time 222 (e.g., an arc on time) based on the detected times during which the input device is on, and calculates and displays a stitch time 224 (e.g., an arc off time) based on the detected times during which the input device is off. For example, the calculated spot time 222 may be calculated based on an average time that the input device is actuated, and the calculated stitch time 224 may be calculated based on an average time that the input device is released. In this way, the operator may intuitively define the spot time and stitch time by pressing and releasing the input device (or other input technique, such as touching the tungsten tip to the workpiece). The example control circuitry 112 may use the determined spot time 222 and stitch time 224 to control stitch welding or overlapping spot welds, such as disclosed in U.S. Provisional Patent Application No. 63/492,060, filed March 24, 2023, and entitled "WELDING POWER SUPPLIES AND METHODS TO CONTROL OVERLAPPING SPOT WELDS."

Instead of, or in addition to, using the user interface 114 to define the pulse frequency, the operator may enter the inputs into the user interface 134 of the remote interface 104. For example, the operator may have a smartphone, tablet computer, smart watch, or other computing device, which may be communicatively connected to the welding power supply 102 for configuration.

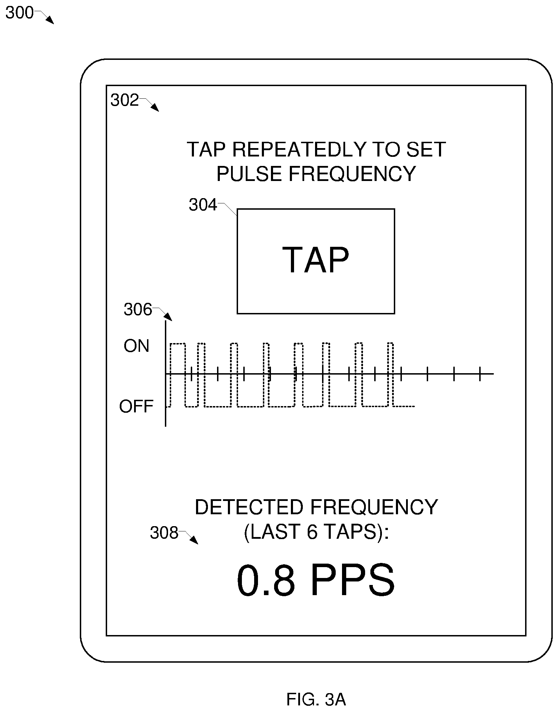

FIG. 3A illustrates an example interface 300 which may implement the user interface 134 of the remote interface 104 of FIG. 1 to input a sequence of pulse frequency inputs. The example interface 300 includes a display 302, such as a touchscreen display. The display 302 includes input instructions and a designated input button 304 (e.g., a button implemented on the touchscreen via software). The example interface 300 may further include a graph 306, which may be implemented in a similar manner to the graph 214 described above with reference to FIG. 2A.

As an example, the operator may provide a set of multiple inputs to the user interface 300 (e.g., via the button 304). Based on the inputs, the control circuitry 132 calculates the frequency of the inputs, The interface 300 further calculates and displays the determined pulse frequency 308 on the display 302. The control circuitry 132 may update the determined pulse frequency 308 as the operator continues to include additional inputs. The remote interface 104 may then command the welding power supply 102 to configure the determined pulse frequency (e.g., via the communications transceivers 118, 119).

In other examples, the control circuitry 112 of the welding power supply 102 may perform one or more of the determinations based on the inputs provided to the remote interface 104. For example, the remote interface 104 may calculate and communicate the frequency of the inputs to the welding power supply 102, which determines the pulse frequency based on the frequency of the inputs. The remote interface 104 may instead communicate the times of the inputs and/or the durations between the inputs to the welding power supply 102, which then determines the input frequency and the pulse frequency from the input timing. The power supply 102 may communicate the determined pulse frequency 308 back to the remote interface 104 for output on the display 302.

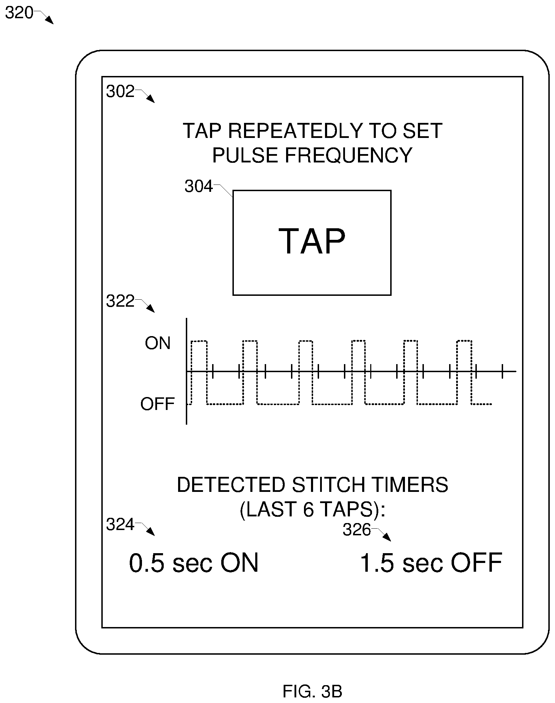

FIG. 3B illustrates another example interface 320, which may implement the user interface 134 of the remote interface 104 FIG. 1 to input a sequence of pulse frequency inputs including durations. The example interface 320 includes the display 302 (e.g., a touchscreen) of FIG. 3A, as well as the button 304 to enable the operator to enter pulse frequency inputs. In the example of FIG. 3B, the button 304 enables the operator to input, to the remote interface 104, both timing and duration of the arc on time and the arc off time. The example interface 320 includes a graph 322, which may be similar or identical to the graph 226 of FIG. 2B. The control circuitry 132 may calculate the arc on time and the arc off time, and display a spot time indicator 324 and a stitch time indicator 326, which may be similar or identical to the spot time 222 and stitch time 224 indicators of FIG. 2B.

Any of the example interfaces 200, 220, 300, 320 may provide other indications of the input timing, input frequency, and/or pulse frequency determined based on the instances or samples of the input.

Returning to FIG. 1, in some examples, the control circuitry 112 provides feedback to the operator to indicate the recognition of the input. For example, the control circuitry 112 may control an output device of the user interface 114 to output an audio signal, control the gas valve 130 (e.g., a contactor in response to detecting an input device being actuated, while the input is actuated (e.g., during ON times), in response to detecting the input device being released, while the input is released (e.g., during OFF times), and/or in response to other inputs and/or events. The gas valve 130 may provide an audible "click" to indicate to the operator that the input is detected.

The control circuitry 112, 132 may apply filtering to the inputs to improve the calculation of the desired pulse frequency input by the operator. For example, because the operator may not be perfectly consistent in timing the inputs, the control circuitry 112, 132 averages all or a subset of the received input samples to determine an average time between the input samples. In some examples, the control circuitry 112, 132 removes one or more of the measured times between input samples, such as times which are statistical outliers (e.g., times more than a threshold difference from the average time, times outside of a range determined using the samples), and/or the highest and lowest times.

Additionally or alternatively, because the operator may take multiple samples to consistently provide inputs at the desired frequency, the control circuitry 112, 132 may drop a predetermined number of samples or times at a beginning of an input sequence, and/or may use a running average of a predetermined number of samples, such that the most recent samples are used to determine the input frequency. For example, the control circuitry 112, 132 may populate a first-in-first-out (FIFO) buffer with times between the input samples, and overwrite earlier times with later times as the number of samples. The control circuitry 112, 132 then uses the times in the buffer to determine the input frequency. The number of times in the buffer or running average may be adjustable by the operator. Additionally or alternatively, the control circuitry 112, 132 may weight later times more heavily than earlier times. The control circuitry 112, 132 may identify missed input samples or excess (e.g., accidental) input samples, either algorithmically or via filtering samples. In some other examples, the control circuitry 112 performs a running transform of a predetermined number of samples to determine the input frequency.

After determining the input frequency, the control circuitry 112, 132 determines a pulse frequency (and/or stitch timing) from the input frequency. For example, the control circuitry 112, 132 may round the input frequency to a predetermined precision (e.g., 0.1 Hz) and/or to a discrete pulse frequency which is selectable via the user interface 114, 134. The control circuitry 112, 132 may round to a nearest discrete frequency, round down, or round up. The predetermined precision may be different based on the range of nearest frequencies, such as to a nearest or next 0.1 Hz for less than a threshold frequency, and to a nearest or next 0.2 Hz (or other step) for more than the threshold frequency.

The operator may indicate that the input sequence is complete, and/or the control circuitry 112, 132 may determine that the input sequence is complete based on a timeout timer expiring. The timeout timer may be set based on, for example, a lower limit on the frequency that can be input by the operator. For example, lower limit of 0.2 Hz may be set, which would correspond to a timeout time of approximately 5 seconds. In some examples, the control circuitry 112, 132 may adjust the timeout time based on the observed times in the buffer to reduce the timeout time from a default timeout time.

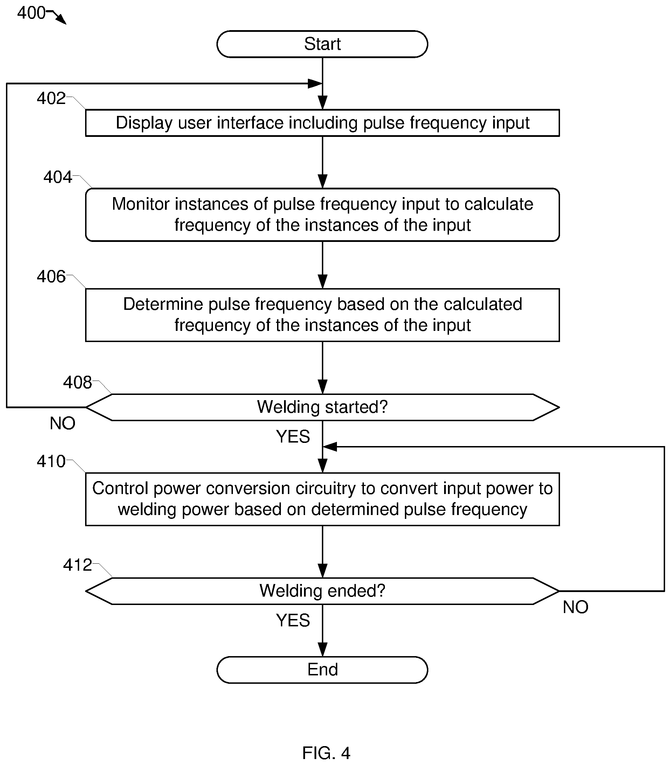

FIG. 4 is a flowchart representative of example machine readable instructions 400 which may be implemented by the power supply 102 of FIG. 1 to output welding power including pulses defined based on pulse frequency inputs.

At block 402, the control circuitry 112 displays a user interface (e.g., a pulse frequency input interface 200) including a pulse frequency input. For example, the user interface 114 may implement either of the interfaces 200, 220 of FIGS. 2A or 2B.

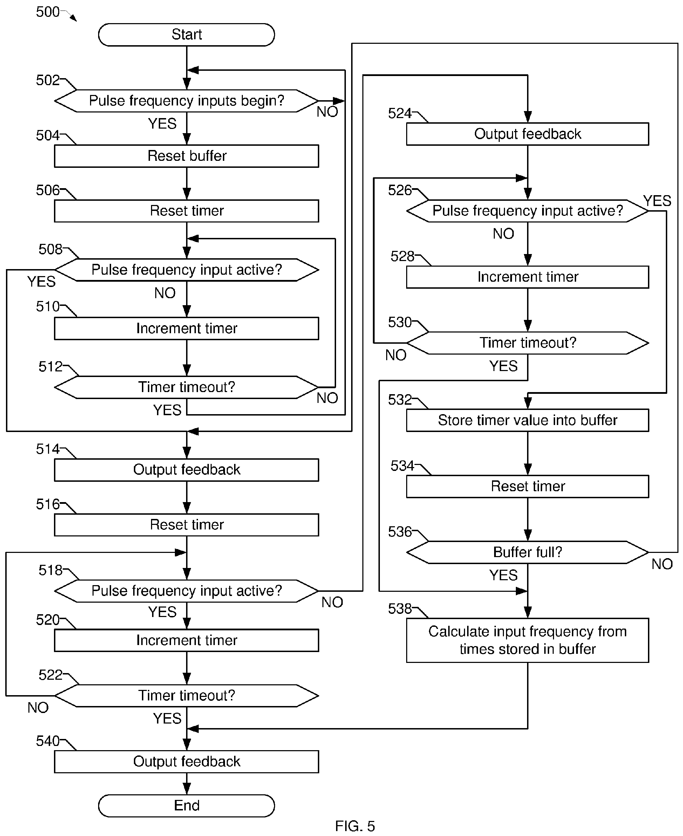

At block 404, the control circuitry 112 monitors instances of a pulse frequency input to calculate a frequency of the instances of the input. For example, the control circuitry 112 may monitor the buttons 204a-204e, 206, 208, 210, the knob 212, and/or other switches or inputs devices of the interface 200, and/or sensor(s) 147 to detect other types of inputs. The display 202 and/or other output devices may output indications of the determined input frequency. An example implementation of block 404 is disclosed below with reference to FIG. 5.

At block 406, the control circuitry 112 determines a pulse frequency based on the calculated frequency of the instances of the input. For example, the control circuitry 112 may filter the instances of the input, round a calculated input frequency to a nearest pulse frequency, and/or otherwise convert the input frequency to a pulse frequency.

At block 408, the control circuitry 112 determines whether welding has started. If welding has not started (block 408), control returns to block 402 to continue monitoring for the pulse frequency inputs.

If welding has started (block 408), at block 410 the control circuitry 112 controls the power conversion circuitry 110 to convert input power to welding power based on the determined pulse frequency. For example, the control circuitry 112 controls the power conversion circuitry 110 to output the welding power to the torch 106 with peak phases and background phases having the pulse frequency determined based on the instances of the pulse frequency input. In examples in which the durations of the pulse frequency inputs are monitored, the example control circuitry 112 may further control the peak phase duration and/or the background phase duration based on the pulse frequency inputs. Additionally or alternatively, the control circuitry 112 may control the power conversion circuitry 110 to perform stitch welding and/or overlapping spot welds using the on times and off times input via the operator via the pulse frequency inputs.

At block 412, the control circuitry 112 determines whether welding has ended. If welding is not ended (block 412), control returns to block 410 to continue controlling the power conversion circuitry 110.

When the welding has ended (block 412), the instructions 400 may also end. In some examples, control may revert to block 402 to receive additional pulse frequency inputs and/or perform additional welds.

FIG. 5 is a flowchart representative of example machine readable instructions 500 which may be implemented by the power supply 102 of FIG. 1 to monitor instances of a pulse frequency input to calculate frequency of the instances of the input. The example instructions 500 may be performed to implement block 404 of FIG. 4. While the example instructions 500 are disclosed below with reference to the power supply 102 and user interface 114, the instructions 500 may be adapted to be executed by the control circuitry 132 of the remote interface 104 of FIG. 1. The example instructions 500 are discussed below with reference to receiving pulse frequency inputs as contact between a tungsten torch tip (e.g., the torch 106 of FIG. 1) and a workpiece (e.g., the workpiece 146).

At block 502, the control circuitry 112 determines whether pulse frequency inputs have begun. For example, the operator may initiate the pulse frequency inputs via the user interface 114, or may initiate pulse frequency inputs by applying a first input while the user interface 114 is in a pulse frequency input interface or mode. If pulse frequency inputs have not begun (block 502), control returns to block 502.

When pulse frequency inputs have begun (block 502), at block 504 the control circuitry 112 resets a buffer for storage of input samples or measured times between input samples. For example, the control circuitry 112 may establish or empty a buffer having a size corresponding to a predetermined number of samples. At block 506, the control circuitry 112 also resets a timeout timer (e.g., for determining whether pulse frequency input has ended).

At block 508, the control circuitry 112 determines whether a pulse frequency input is active. For example, the pulse frequency input may be considered active when the tungsten tip of the torch 106 is in contact with the workpiece 146, and may be considered inactive when the when the tungsten tip of the torch 106 is not in contact with the workpiece 146 (e.g., as detected by the sensor(s) 147).

If the pulse frequency input is detected as active (block 508), at block 510 the control circuitry 112 increments the timeout timer and, at block 512, determines whether the timer has timed out. For example, if the timeout timer reaches a predetermined threshold time (or count), control returns to block 502 to restart pulse frequency inputs.

If the pulse frequency input is not detected as active (block 508), at block 514 the control circuitry 112 outputs a feedback to the operator to indicate that the pulse frequency input is detected. For example, the control circuitry 112 may control the gas valve 130 to open, output a visual indicator via the user interface 114 and/or the remote interface 104, and/or output an audible indicator via the user interface 114 and/or the remote interface 104. At block 516, the control circuitry 112 resets the timeout timer.

At block 518, the control circuitry 112 determines whether the pulse frequency input is still active. If the pulse frequency input is still active (e.g., the tungsten is still in contact with the workpiece 146) (block 518), at block 520 the control circuitry 112 increments the timer and, at block 522, determines whether the timer has reached a timeout value. The timeout value may the same at block 522 as at block 512, or may be different. If the timeout value has not been reached (block 522), control returns to block 518 to continue monitoring the pulse frequency input.

If the pulse frequency input is determined to no longer be active prior to the timer reaching the timeout value (block 518), at block 524 the control circuitry 112 controls the output device to stop outputting the feedback. For example, the control circuitry 112 outputs (or stops outputting) a feedback to the operator to indicate that the pulse frequency input is detected as not active. For example, the control circuitry 112 may control the gas valve 130 to close, output a different visual indicator (or stop outputting the visual indicator) via the user interface 114 and/or the remote interface 104, and/or output a different audible indicator (or stop outputting the audible indicator) via the user interface 114 and/or the remote interface 104.

At block 526, the control circuitry 112 determines whether the pulse frequency input is active. Block 526 may be implemented in a similar or identical manner as block 508. If the pulse frequency input is not active (block 526), at block 528 the control circuitry 112 increments the timer and, at block 530, determines whether the timer has reached a timeout value. If the timeout value has not been reached (block 530), control returns to block 526 to monitor for a pulse frequency input.

If the pulse frequency input is detected as active prior to a timeout (block 526), at block 532 the control circuitry 112 stores the current timer value into the buffer. The timer value may be stored, for example, on a FIFO basis in which the earliest values are the first to be overwritten when the buffer is filled. At block 534, the control circuitry 112 resets the timer.

At block 536, the control circuitry 112 determines whether the buffer is full. If the buffer is not full, control returns to block 514 to continue monitoring for pulse frequency inputs and/or timeouts.

When the buffer is full (block 536), or if the timer reaches the timeout value (block 530), the control circuitry 112 calculates an input frequency from the times stored in the buffer. For example, the control circuitry 112 may average and/or other otherwise filter the times stored in the buffer, and use the filtered times to determine the input frequency.

After calculating the input frequency (block 538), or if the timer timeout is reached (block 522), at block 540 the control circuitry 112 outputs the feedback. Block 540 may be similar to block 524. The example instructions 500 may then end, and/or return control to block 406 of FIG. 4.

In some examples, block 536 may be omitted and times may be stored in the buffer until a timeout is reached and/or the operator indicates an end of the samples.

Returning to FIG. 1, in some other examples the user interface 114, 134 may allow the operator to load an audio file that represents the desired frequency (e.g., a beat or tempo of a song, a recorded arc sound, etc.). The control circuitry 112 may perform a frequency analysis on the loaded audio file to determine the primary and/or dominant frequencies in the audio. In some examples, the control circuitry 112 may present options of identified frequencies in the audio, and output a representation of each option (e.g., a light or display blinking at the frequency, an audible beat at the frequency) in response to user selection of any of the frequencies.

The present invention may be realized in hardware, software, and/or a combination of hardware and software. A typical combination of hardware and software may include one or more application specific integrated circuits and/or chips. Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

While the present invention has been described with reference to certain implementations, it will be understood by those skilled in the art that various changes may be made and equivalents may be substituted without departing from the scope of the present invention as defined in the appended claims.

## Claims

1. A welding power supply (102), comprising:
power conversion circuitry (110) configured to convert input power to welding power;
an input device (115, 135, 106) configured to receive a plurality of instances of an input; and
the welding power supply (102) being **characterised by** :
a control circuitry (112) being configured to:
calculate a frequency of the plurality of instances of the input; and
control the power conversion circuitry (110) to output the welding power as a series of pulses having a pulse frequency determined based on the calculated frequency.

2. The welding power supply (102) as defined in claim 1, wherein the input device (115) is an operator interface (114) on a housing of the welding power supply configured to receive the plurality of instances of the input via repeated inputs to the input device, or
wherein the input device (135) is a remote control device (104) communicatively coupled to the welding power supply.

3. The welding power supply (102) as defined in claim 1, wherein the input device is at least one of a welding torch (106) or a filler metal feeder in electrical communication with the welding power supply, and the input device is configured to detect the plurality of instances of the input via at least one of a capacitive sensor, a voltage sensor, or a current sensor.

4. The welding power supply (102) as defined in claim 1, wherein the control circuitry (112) is configured to calculate the frequency of the plurality of instances of the input based on filtering measured times between sequential ones of the plurality of instances of the input.

5. The welding power supply (102) as defined in claim 4, wherein the filtering comprises averaging.

6. The welding power supply (102) as defined in claim 4, wherein the filtering comprises removing one or more of the measured times.

7. The welding power supply (102) as defined in claim 4, wherein the filtering comprises populating a first-in-first-out buffer of the measured times, the buffer having a predetermined number of measured times, and the control circuitry (112) is configured to determine the frequency of the plurality of instances of the input based on the measured times in the buffer.

8. The welding power supply (102) as defined in claim 1, wherein the input device (115, 135) comprises a microphone.

9. The welding power supply (102) as defined in claim 1, wherein the control circuitry (112) is configured to output audible or visual feedback in response to detecting inputs via the input device.

10. The welding power supply (102) as defined in claim 1, wherein the control circuitry (112) is configured to determine the pulse frequency based on rounding the calculated frequency of the plurality of inputs to at least one of a predetermined discrete pulse frequency or a predetermined precision.

11. The welding power supply (102) as defined in claim 1, wherein the control circuitry (112) is configured to:
determine at least one of a peak time of a peak phase or a background time of a background phase, based on at least one of calculated durations of the plurality of inputs or calculated durations between the plurality of inputs; and
control the power conversion circuitry (110) based on a plurality of pulse cycles, the pulse cycles occurring at the determined pulse frequency and each pulse cycle having the peak phase and the background phase.

12. A welding system (100), comprising:
an interface device (104) configured to receive a plurality of instances of an input; and
a welding power supply (102);
**characterised in that** the interface device is configured to calculate a frequency of the plurality of instances of the input, and communicate, to the welding power supply, the frequency of the plurality of instances of the input;
and, **in that** the welding power supply (102) comprises:
power conversion circuitry (110) configured to convert input power to welding power;
communication circuitry (118) configured to receive, from the interface device (104), the frequency of the plurality of instances of the input; and
control circuitry (112) configured to control the power conversion circuitry (110) to output the welding power as a series of pulses having a pulse frequency determined based on the frequency of the plurality of instances of the input.

13. The welding system (100) as defined in claim 12, wherein the interface device (104) comprises at least one of a smartphone, a smart watch, a tablet computer.

## Patentansprüche

1. Schweißstromversorgung (102), aufweisend:
eine Leistungsumwandlungsschaltung (110), die so eingerichtet ist, dass sie Eingangsleistung in Schweißleistung umwandelt;
ein Eingabegerät (115, 135, 106), das so eingerichtet ist, dass es mehrere Instanzen einer Eingabe empfängt; und
wobei die Schweißstromversorgung (102) **gekennzeichnet ist durch**:
eine Steuerschaltung (112), eingerichtet zum:
Berechnen einer Frequenz der mehreren Instanzen der Eingabe; und
Steuern der Leistungsumwandlungsschaltung (110) zum Ausgeben der Schweißleistung als eine Reihe von Impulsen mit einer Impulsfrequenz, die basierend auf der berechneten Frequenz bestimmt wird.

2. Schweißstromversorgung (102) nach Anspruch 1, wobei das Eingabegerät (115) eine Bedienerschnittstelle (114) an einem Gehäuse der Schweißstromversorgung ist, die so eingerichtet ist, dass sie die mehreren Instanzen der Eingabe über wiederholte Eingaben in das Eingabegerät empfängt, oder
wobei das Eingabegerät (135) ein Fernsteuerungsgerät (104) ist, das kommunikativ mit der Schweißstromversorgung gekoppelt ist.

3. Schweißstromversorgung (102) nach Anspruch 1, wobei das Eingabegerät mindestens eines aus einem Schweißbrenner (106) oder einer Füllmetallzuführung in elektrischer Verbindung mit der Schweißstromversorgung ist und das Eingabegerät so eingerichtet ist, dass es die mehreren Instanzen der Eingabe über mindestens eines aus einem kapazitiven Sensor, einem Spannungssensor oder einem Stromsensor erfasst.

4. Schweißstromversorgung (102) nach Anspruch 1, wobei die Steuerschaltung (112) so eingerichtet ist, dass sie die Frequenz der mehreren Instanzen der Eingabe basierend auf einem Filtern gemessener Zeiten zwischen aufeinanderfolgenden aus den mehreren Instanzen der Eingabe berechnet.

5. Schweißstromversorgung (102) nach Anspruch 4, wobei das Filtern eine Mittelwertbildung aufweist.

6. Schweißstromversorgung (102) nach Anspruch 4, wobei das Filtern ein Entfernen einer oder mehrerer der gemessenen Zeiten aufweist.

7. Schweißstromversorgung (102) nach Anspruch 4, wobei das Filtern ein Befüllen eines First-in-first-out-Puffers der gemessenen Zeiten umfasst, wobei der Puffer eine vorbestimmte Anzahl von gemessenen Zeiten aufweist, und die Steuerschaltung (112) so eingerichtet ist, dass sie die Frequenz der mehreren Instanzen der Eingabe basierend auf den gemessenen Zeiten in dem Puffer bestimmt.

8. Schweißstromversorgung (102) nach Anspruch 1, wobei das Eingabegerät (115, 135) ein Mikrofon aufweist.

9. Schweißstromversorgung (102) nach Anspruch 1, wobei die Steuerschaltung (112) so eingerichtet ist, dass sie hörbare oder visuelle Rückmeldung in Reaktion auf das Erfassen von Eingaben über das Eingabegerät ausgibt.

10. Schweißstromversorgung (102) nach Anspruch 1, wobei die Steuerschaltung (112) so eingerichtet ist, dass sie die Impulsfrequenz basierend auf einem Runden der berechneten Frequenz der mehreren Eingaben auf mindestens eines aus einer vorbestimmten diskreten Impulsfrequenz oder einer vorbestimmten Genauigkeit bestimmt.

11. Schweißstromversorgung (102) nach Anspruch 1, wobei die Steuerschaltung (112) zu Folgendem eingerichtet ist:
Bestimmen mindestens eines aus einer Spitzenzeit einer Spitzenphase oder einer Hintergrundzeit einer Hintergrundphase basierend auf mindestens einem aus berechneten Dauern der mehreren Eingaben oder berechneten Dauern zwischen den mehreren Eingaben; und
Steuern der Leistungsumwandlungsschaltung (110) basierend auf mehreren Impulszyklen, wobei die Impulszyklen bei der bestimmten Impulsfrequenz auftreten und jeder Impulszyklus die Spitzenphase und die Hintergrundphase aufweist.

12. Schweißsystem (100), aufweisend:
ein Schnittstellengerät (104), das so eingerichtet ist, dass es mehrere Instanzen einer Eingabe empfängt; und
eine Schweißstromversorgung (102);
**dadurch gekennzeichnet, dass**
das Schnittstellengerät so eingerichtet ist, dass es eine Frequenz der mehreren Instanzen der Eingabe berechnet und der Schweißstromversorgung die Frequenz der mehreren Instanzen der Eingabe übermittelt;
und dadurch, dass die Schweißstromversorgung (102) Folgendes aufweist:
eine Leistungsumwandlungsschaltung (110), die so eingerichtet ist, dass sie Eingangsleistung in Schweißleistung umwandelt;
eine Kommunikationsschaltung (118), die so eingerichtet ist, dass sie von dem Schnittstellengerät (104) die Frequenz der mehreren Instanzen der Eingabe empfängt; und
eine Steuerschaltung (112), die so eingerichtet ist, dass sie die Leistungsumwandlungsschaltung (110) so steuert, dass sie die Schweißleistung als eine Reihe von Impulsen ausgibt, die eine Impulsfrequenz aufweisen, die basierend auf der Frequenz der mehreren Instanzen der Eingabe bestimmt wird.

13. Schweißsystem (100) nach Anspruch 12, wobei das Schnittstellengerät (104) mindestens eines aus einem Smartphone, einer intelligenten Uhr oder einem Tablet-Computer aufweist.

## Revendications

1. Alimentation électrique de soudage (102), comprenant :
un circuit de conversion de puissance (110) configuré pour convertir de la puissance d'entrée en puissance de soudage ;
un dispositif d'entrée (115, 135, 106) configuré pour recevoir une pluralité d'instances d'une entrée ; et
l'alimentation électrique de soudage (102) étant **caractérisée par** :
un circuit de commande (112) qui est configuré pour :
calculer une fréquence de la pluralité d'instances de l'entrée ; et
commander le circuit de conversion de puissance (110) pour fournir en sortie la puissance de soudage sous la forme d'une série d'impulsions ayant une fréquence d'impulsion déterminée sur la base de la fréquence calculée.

2. Alimentation électrique de soudage (102) selon la revendication 1, dans laquelle le dispositif d'entrée (115) est une interface d'opérateur (114) sur un boîtier de l'alimentation électrique de soudage configurée pour recevoir la pluralité d'instances de l'entrée via des entrées répétées au dispositif d'entrée, ou
dans laquelle le dispositif d'entrée (135) est un dispositif de commande à distance (104) couplé en communication à l'alimentation électrique de soudage.

3. Alimentation électrique de soudage (102) selon la revendication 1, dans laquelle le dispositif d'entrée est au moins l'un parmi un chalumeau de soudage (106) ou un dispositif d'amenée de métal d'apport en communication électrique avec l'alimentation électrique de soudage, et le dispositif d'entrée est configuré pour détecter la pluralité d'instances de l'entrée via au moins l'un parmi un capteur capacitif, un capteur de tension, ou un capteur de courant.

4. Alimentation électrique de soudage (102) selon la revendication 1, dans laquelle le circuit de commande (112) est configuré pour calculer la fréquence de la pluralité d'instances de l'entrée sur la base du filtrage de temps mesurés entre des instances séquentielles de la pluralité d'instances de l'entrée.

5. Alimentation électrique de soudage (102) selon la revendication 4, dans laquelle le filtrage comprend un moyennage.

6. Alimentation électrique de soudage (102) selon la revendication 4, dans laquelle le filtrage comprend l'élimination d'un ou de plusieurs des temps mesurés.

7. Alimentation électrique de soudage (102) selon la revendication 4, dans laquelle le filtrage comprend le remplissage d'un tampon premier entré-premier sorti des temps mesurés, le tampon ayant un nombre prédéterminé de temps mesurés, et le circuit de commande (112) est configuré pour déterminer la fréquence de la pluralité d'instances de l'entrée sur la base des temps mesurés dans le tampon.

8. Alimentation électrique de soudage (102) selon la revendication 1, dans laquelle le dispositif d'entrée (115, 135) comprend un microphone.

9. Alimentation électrique de soudage (102) selon la revendication 1, dans laquelle le circuit de commande (112) est configuré pour fournir en sortie une rétroaction sonore ou visuelle en réponse à la détection d'entrées via le dispositif d'entrée.

10. Alimentation électrique de soudage (102) selon la revendication 1, dans laquelle le circuit de commande (112) est configuré pour déterminer la fréquence d'impulsion sur la base de l'arrondi de la fréquence calculée de la pluralité d'entrées à au moins une fréquence d'impulsion discrète prédéterminée ou une précision prédéterminée.

11. Alimentation électrique de soudage (102) selon la revendication 1, dans laquelle le circuit de commande (112) est configuré pour :
déterminer au moins l'un parmi un temps de crête d'une phase de crête ou un temps d'arrière-plan d'une phase d'arrière-plan, sur la base de durées calculées de la pluralité d'entrées et/ou de durées calculées entre la pluralité d'entrées ; et
commander le circuit de conversion de puissance (110) sur la base d'une pluralité de cycles d'impulsions, les cycles d'impulsions se produisant à la fréquence d'impulsion déterminée et chaque cycle d'impulsion ayant la phase de crête et la phase d'arrière-plan.

12. Système de soudage (100) comprenant :
un dispositif d'interface (104) configuré pour recevoir une pluralité d'instances d'une entrée ; et
une alimentation électrique de soudage (102) ;
**caractérisé en ce que**
le dispositif d'interface est configuré pour calculer une fréquence de la pluralité d'instances de l'entrée, et communiquer, à l'alimentation électrique de soudage, la fréquence de la pluralité d'instances de l'entrée ;
et, **en ce que** l'alimentation électrique de soudage (102) comprend :
un circuit de conversion de puissance (110) configuré pour convertir de la puissance d'entrée en puissance de soudage ;
un circuit de communication (118) configuré pour recevoir, à partir du dispositif d'interface (104), la fréquence de la pluralité d'instances de l'entrée ; et
un circuit de commande (112) configuré pour commander le circuit de conversion de puissance (110) pour fournir en sortie la puissance de soudage sous la forme d'une série d'impulsions ayant une fréquence d'impulsion déterminée sur la base de la fréquence de la pluralité d'instances de l'entrée.

13. Système de soudage (100) selon la revendication 12, dans lequel le dispositif d'interface (104) comprend au moins l'un parmi un téléphone intelligent, une montre intelligente, un ordinateur tablette.
